# EUROPÄISCHE PATENTSCHRIFT

(11) **EP 1 382 409 B1**
(45) Veröffentlichungstag und Bekanntmachung des Hinweises auf die Patenterteilung: **20.02.2008**
(21) Anmeldenummer: 03102055.5
(22) Anmeldetag: 09.07.2003
(51) Int. Cl.: B23B 51/00, E21B 10/36, B28D 1/14

(54) **Betonbohrer**
Concrete drill bit
Foret pour béton

(30) Priorität: 17.07.2002 DE 10232214
(43) Veröffentlichungstag der Anmeldung: 21.01.2004
(73) Patentinhaber: HILTI Aktiengesellschaft, 9494 Schaan (LI)
(72) Erfinder: Cramer, Till, 6800 Feldkirch (AT); Bertsch, Reinhard, 6710 Nenzing (AT); Mugg, Peter, 6806 Feldkirch (AT); Schad, Hanspeter, 9472 Grabs (CH)
(74) Vertreter: Wildi, Roland

(56) Entgegenhaltungen:
- EP-A- 1 217 165
- DE-C- 732 395
- DE-U- 9 211 782
- US-A- 1 863 928
- US-A- 4 852 672

## Beschreibung

Die Erfindung bezeichnet einen drehend und schlagend von einer Handwerkzeugmaschine antreibbaren Betonbohrer mit Hartstoffeinsätzen.

Üblicherweise sind von einer Handwerkzeugmaschine antreibbare kleine Betonbohrer bis zum Bohrdurchmesser von 40 mm, auf welche sich diese Erfindung beschränkt, entweder einteilig als Hammerbohrer mit einem festen Bohrkopf mit Hartstoffeinsätzen oder zweiteilig mit einem relativ zum Bohrerschaft axial begrenzt beweglichen Bohrkopf mit Hartstoffeinsätzen ausgebildet. Derartige schlagend und drehend beanspruchte Hartstoffeinsätze weisen üblicherweise eine stumpfe Schneide mit einem Schneidradius grösser 1/20 des Bohrdurchmessers sowie einen negativen Spanwinkel von -25° bis -45° auf, wodurch hohe Schlagenergien für den dominierenden, zermürbenden Abbauprozess notwendig sind und sich in Beton eingebettete Armierungseisen nur uneffizient bohren lassen. Der durch die hohen Schlagenergien erzeugte grosse Luft- und Körperschall ist insbesondere im Bauhaupt- und Nebengewerbe

Nach der US4852672 weist ein kleiner Betonbohrer einen rein drehenden Schneidteil und einen, separat im Bohrerschaft geführten, Schlagteil auf, welcher etwas axial voreilend eine Pilotbohrung zur Entspannung der Bohrlochfläche erstellt. Nach der DE19748987 ist ein grosser Gesteinsbohrer mit einem, mit Hartstoffzähnen besetzten, rein drehenden Schneidteil und einem, nach der zudem DE19950599 separat von einem im Bohrerschaft innenliegenden Stössel anstossbaren, Schlagteil ausgeführt, welcher etwas axial voreilend eine Pilotbohrung zur Entspannung der Bohrlochfläche erstellt. Durch diese räumliche Funktionstrennung wirkt auf einen Feinstrukturbereich in der Bohrlochfläche stets nur ein und derselbe Abbauprozess ein.

Die US 1863928 bildet den Oberbegriff für Anspruch 1 und zeigt einen zum Bohren tiefer Brunnen drehend und schlagend angetriebenen Bohrer grossen Durchsmessers mit einem Schneidteil und einem zu diesem begrenzt axial beweglichen Schlagteil, welche jeweils stirnflächige Arbeitsbereiche zur Bearbeitung einer Bohrlochfläche aufweisen, wobei sich die jeweiligen stirnflächigen Arbeitsbereiche des Schneidteils und des Schlagteils bei Drehung des Bohrers radial überlagern.

Die Aufgabe der Erfindung besteht in der Realisierung eines von einer Handwerkzeugmaschine antreibbaren kleinen Betonbohrers mit effizienter Bohrleistung in armierten und nichtarmierten Beton. Ein weiterer Aspekt besteht in der Verringerung der benötigten Schlagenergien.

Die Aufgabe wird im Wesentlichen durch die Merkmale des unabhängigen Anspruchs gelöst. Vorteilhafte Weiterbildungen ergeben sich aus den Unteransprüchen.

Im Wesentlichen weist ein drehend antreibbarer, kleiner Betonbohrer einen Schneidteil und einen zu diesen begrenzt axial beweglichen Schlagteil auf, welche jeweils stirnflächige Arbeitsbereiche zur Bearbeitung einer Bohrlochfläche aufweisen, wobei sich die jeweiligen stirnflächigen Arbeitsbereiche des Schneidteils und des Schlagteils bei Drehung radial überlagern.

Durch die radiale Überlagerung der stirnflächigen Arbeitsbereiche wird der zugeordnete Teil der Bohrlochfläche bei der Drehung des Betonbohrers alternierend vom Schlagteil und vom Schneidteil bearbeitet, wodurch zeitlich alternierend zwei verschiedene Abbauprozesse in der Bohrlochfläche wirken, wobei der rammende Schlagteil in einem axialen Feinstrukturbereich von 0,1 mm - 1,0 mm eine Schädigungszone vorschädigt, in welcher die zum spanenden Abtrag notwendigen Zerspankräfte( Normal- und Schittkraft) wesentlich geringer als im nicht vorgeschädigten Material sind. Entsprechende Experimente belegen eine Absenkung der Zerspankräfte um bis zu 80°. Der somit im wesentlichen spanend erfolgende Abtrag ist effizient sowohl in armierten und nichtarmierten Beton. Durch die mögliche Absenkung der Schlagenergien verringert sich der Luft-und Körperschall. Ebenso können die antreibenden Handwerkzeugmaschinen kleiner, leichter und vibrationsärmer ausgeführt werden.

Vorteilhaft überlagern sich die Arbeitsbereiche bei Drehung radial von einem kleinen Zentrumsbereich bis zum Gesamtbohrradius, wodurch nahezu die gesamte Vollbohrung alternierend mit zwei verschiedenen Abbauprozessen bearbeitet wird.

Vorteilhaft bildet in einer Zwischenposition des Schlagteils das Schneidteil und das Schlagteil bei Drehung eine im wesentlichen gemeinsame ebene, leicht gewölbte oder leicht kegelige Hüllkopffläche am kopfseitigen Stirnende aus, wodurch bei wiederholter Schlagbeanspruchung das Schneidteil und das Schlagteils alternierend bezüglich der Bohrlochfläche entlastet sind, wodurch die beiden verschiedenen Abbauprozesse vollständig entkoppelt sind.

Zumindest am kopfseitigen Stirnende sind das Schlagteil und das Schneidteil in der Querebene segmentartig mit mindestens zwei Schlagsegmenten und mindestens zwei Schneidsegmenten ineinander verschachtelt ausgebildet, wodurch bei einer Umdrehung des Betonbohrers das Schlagteil und das Schneidteil mehrfach alternierend einem Feinstrukturbereich in der Bohrlochfläche bearbeitend zugeordnet ist.

Wesentlich ist, dass umfänglich benachbarte Schlagsegmente und Schneidsegmente gemeinsame, axial verlaufenden Zwischensegmentflächen ausbilden, wodurch eine einfache gegenseitige Axialführung und Drehmitnahme der Schlagsegmente realisiert ist.

Vorteilhaft sind zumindest zwei Schlagsegmente am kopfseitigen Stirnende des Schlagteils miteinander verbunden, wodurch diese eine belastbarere Geometrie aufweist.

Vorteilhaft sind genau zwei diametral gegenüberliegende, miteinander verbundene Schlagsegmente in genau zwei diametral gegenüberliegenden, am kopfseitigen Stirnende unverbundenen, Schneidsegmenten verschachtelt angeordnet, wodurch bei gegenseitiger Führung ein relativ kompakter und somit hoch belastbarer Schlagteil realisierbar ist.

Vorteilhaft weisen die Schneidkanten des Schneidteils bzw. Schneidsegments einen Schneidradius kleiner 1/20 des Bohrdurchmessers und weiter vorteilhaft einen Spanwinkel im Bereich (-10° bis +120°) auf, wodurch diese auf einen zerspanenden Abbauprozess optimiert sind und hinreichend gut Armierungseisen schneiden.

Vorteilhaft sind die Schneidkanten durch Hartstoffeinsätze, weiter vorteilhaft durch Hartstoffeinsätze mit Schichten aus polykristalline Diamanten (PKD) ausgebildet, welcher weniger verschleissen und somit eine höhere Lebensdauer aufweisen.

Vorteilhaft ist dem Schlagteil ein separat im Bohrerschaft axial begrenzt beweglich geführter Stössel zugeordnet, wodurch ein durch diesen axial laufender, steiler Stossimpuls reflektionsarm und somit nahezu vollständig auf das Schlagteil übertragbar ist, welcher in die Bohrlochfläche rammt und diese im Feinstrukturbereich vorschädigt.

Vorteilhaft ist der Schlagteil aus einem sehr verschleissfesten Material ausgeführt bspw. aus einem PKD-beschichteten kalottenförmigen Hartmetallträger, wodurch die Lebensdauer des Schlagteils erhöht wird.

Vorteilhaft ist das Schneidteil zu einem Einsteckende zur Aufnahme in eine Handwerkzeugmaschine begrenzt axial beweglich gelagert, wodurch es vollständig von schlagender Beanspruchung entkoppelt ist, wodurch die Schneiden weniger beansprucht werden und eine höhere Lebensdauer aufweisen.

Vorteilhaft ist das Schneidteil, weiter vorteilhaft der Bohrerschaft, mit einem Federmittel axial federnd gegen das Einsteckende vorgespannt, wodurch eine definierte Normalkraft des Scheidteils auf das Werkstück realisiert wird.

Vorteilhaft weist der Querschnitt durch das kopfseitige Stirnende, weiter vorteilhaft grossflächige segmentartige, Freiräume auf, wodurch der Abbrieb aus dem Bohrloch abtransportierbar ist.

Vorteilhaft ist ein mit dem Schneidteil drehfest verbunder Bohrerschaft als Hohlzylinder ausgebildet, wodurch der Abbrieb aus dem Bohrloch im Schaftinneren absaugbar ist.

Die Erfindung wird bezüglich eines vorteilhaften Ausführungsbeispiels näher erläutert mit:
Fig. 1 als perspektivische Darstellung des kopfseitigen Stirnendes des Betonbohrers
Fig. 2 als Draufsicht auf das kopfseitige Stirnendes des Betonbohrers
Fig. 3a, 3b als um 90° versetzte Längsschnitte

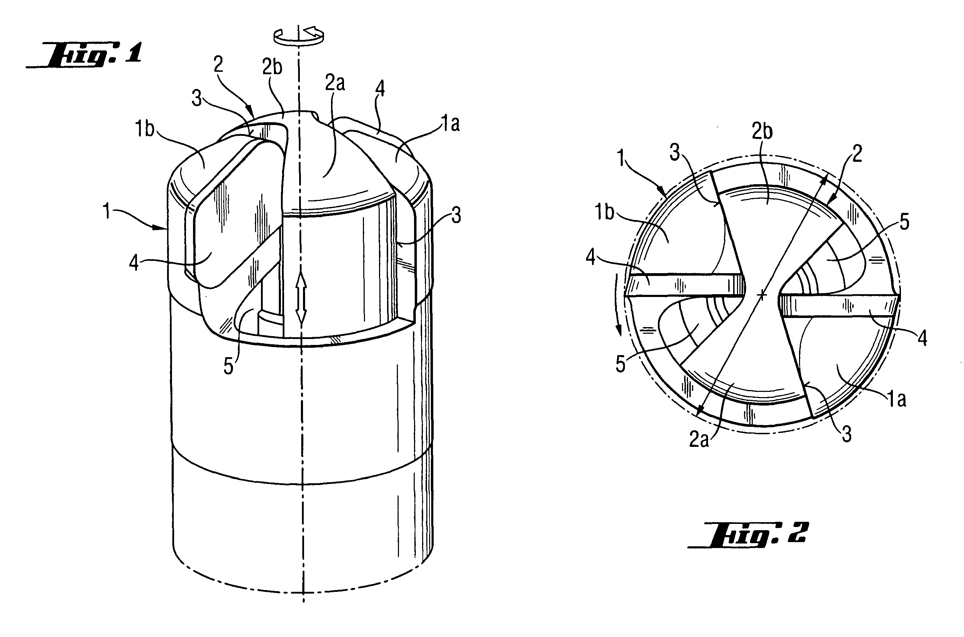

Nach den Fig. 1, 2 weist das kopfseitige Stirnende eines drehend antreibbaren, kleinen Betonbohrers einen Schneidteil 1 und einen zu diesen, bei Fig. 2 normal zur Darstellungsebene, begrenzt axial beweglichen Schlagteil 2 auf, wobei sich die jeweiligen Arbeitsbereiche des Schneidteils und des Schlagteils bei Drehung radial von einem kleinen Zentrumsbereich bis zum Gesamtbohrradius überlagern. Das Schlagteil 2 und das Schneidteil 1 sind in der Querebene segmentartig mit zwei Schlagsegmenten 2a, 2b und zwei Schneidsegmenten 1a, 1b ineinander verschachtelt ausgebildet, wobei umfänglich benachbarte, im Zentrumsbereich miteinander verbundene Schlagsegmente 2a, 2b mit den Schneidsegmenten 1a, 1b gemeinsame, axial verlaufenden Zwischensegmentflächen 3 ausbilden. Die aus Hartstoffeinsätzen 4 mit Schichten aus polykristalline Diamanten (PKD) ausgebildeten scharfen Schneidkanten der Schneidsegmente 1a, 1b weisen einen Spanwinkel von 0° auf, denen jeweils in Drehrichrtung grossflächige segmentartige Freiräume 5 vorgelagert sind.

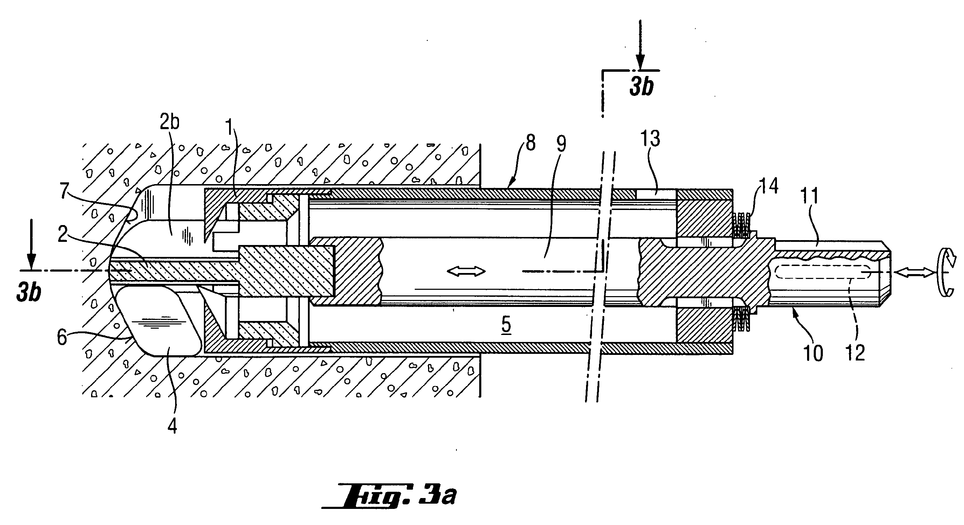

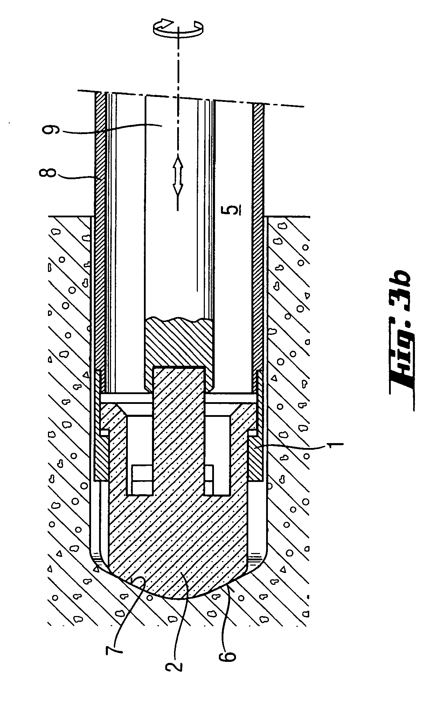

Nach den Fig. 3a, 3b bildet das Schneidteil 1 und das in einer axialen Zwischenposition dargestellte Schlagteil 2 aus PKD-beschichteten Hartmetall bei Drehung eine im wesentlichen gemeinsame leicht gewölbte Hüllkopffläche 6 am kopfseitigen Stirnende aus, welche die zugeordnete Bohrlochfläche 7 bearbeitet. Ein mit dem Schneidteil 1 drehfest verbundener Bohrerschaft 8 ist als Hohlzylinder ausgebildet. Dem Schlagteil 1 ist ein separat im Bohrerschaft 8 axial begrenzt beweglich geführter Stössel 9 zugeordnet, wobei sich längs durchgehend zwischen diesen der Freiraum 5 erstreckt. Nach Fig. 3a ist das Schneidteil 1 über den Bohrerschaft 8 begrenzt axial beweglich mit einem Einsteckende 10 verbunden, welches Drehmitnahmenuten 11 und axial geschlossene Verriegelungsnuten 12 aufweist.

Der Freiraum 5 ist mit Absaugöffnungen 13 im Bohrerschaft 8 verbunden. Das Schneidteil 1 ist über den Bohrerschaft 8 z. B. mit einer Spiralfeder als Federmittel 14 axial federnd gegen das Einsteckende 10 vorgespannt.

## Patentansprüche

1. Betonbohrer für eine drehend und schlagend antreibende Handwerkzeugmaschine mit einem Schneidteil (1) und einem zu diesem begrenzt axial beweglichen Schlagteil (2), welche jeweils stirnflächige Arbeitsbereiche zur Bearbeitung einer Bohrlochfläche (7) aufweisen, wobei sich die jeweiligen stirnflächigen Arbeitsbereiche des Schneidteils (1) und des Schlagteils (2) bei Drehung des Betonbohrers radial überlagern und zumindest am kopfseitigen Stirnende das Schlagteil (2) und das Schneidteil (1) in der Querebene segmentartig mit mindestens zwei Schlagsegmenten (2a, 2b) und mindestens zwei Schneidsegmenten (1a, 1 b) ineinander verschachtelt ausgebildet sind,
**dadurch gekennzeichnet, dass** umfänglich benachbarte Schlagsegmente (2a, 2b) und Schneidsegmente (1a, 1b) gemeinsame, axial verlaufenden Zwischensegmentflächen (3) ausbilden.

2. Betonbohrer nach Anspruch 1, **dadurch gekennzeichnet, dass** sich die Arbeitsbereiche bei Drehung radial von einem kleinen Zentrumsbereich bis zum Gesamtbohrradius überlagern.

3. Betonbohrer nach Anspruch 1 oder 2, **dadurch gekennzeichnet, dass** in einer axialen Zwischenposition des Schlagteils (2) das Schneidteil (1) und das Schlagteil (2) bei Drehung eine im wesentlichen gemeinsame Hüllkopffläche (6) am kopfseitigen Stirnende ausbilden.

4. Betonbohrer nach einem der vorherigen Ansprüche, **dadurch gekennzeichnet, dass** zumindest zwei Schlagsegmente (2a, 2b) am kopfseitigen Stirnende des Schlagteils (2) miteinander verbunden sind.

5. Betonbohrer nach Anspruch 4, **dadurch gekennzeichnet, dass** genau zwei diametral gegenüberliegende, miteinander verbundene Schlagsegmente (2a, 2b) in genau zwei diametral gegenüberliegenden, am kopfseitigen Stirnende unverbundenen, Schneidsegmenten (1 a, 1 b) verschachtelt angeordnet sind.

6. Betonbohrer nach einem der vorherigen Ansprüche, **dadurch gekennzeichnet, dass** die Schneidkanten des Schneidteils (1) bzw. Schneidsegments (1a, 1b) einen Schneidradius kleiner 1/20 des Bohrdurchmessers und optional einen Spanwinkel im Bereich -10° bis +10° aufweisen.

7. Betonbohrer nach Anspruch 4, **dadurch gekennzeichnet, dass** die Schneidkanten durch Hartstoffeinsätze (4) ausgebildet sind, und dass optional die Hartstoffeinsätze (4) Schichten aus polykristallinen Diamanten (PKD) aufweisen.

8. Betonbohrer nach einem der vorherigen Ansprüche, **dadurch gekennzeichnet, dass** dem Schlagteil (2) ein separat im Bohrerschaft (8) axial begrenzt beweglich geführter Stössel (9) zugeordnet ist.

9. Betonbohrer nach einem der vorherigen Ansprüche, **dadurch gekennzeichnet, dass** der Schlagteil (2) aus einem sehr verschleissfesten Material ausgeführt ist.

10. Betonbohrer nach einem der vorherigen Ansprüche, **dadurch gekennzeichnet, dass** das Schneidteil (1) zu einem Einsteckende (10) zur Aufnahme in eine Handwerkzeugmaschine begrenzt axial beweglich gelagert ist.

11. Betonbohrer nach Anspruch 10, **dadurch gekennzeichnet, dass** das Schneidteil (1) mit einem Federmittel (14) axial federnd gegen das Einsteckende (10) vorgespannt ist.

12. Betonbohrer nach einem der vorherigen Ansprüche, **dadurch gekennzeichnet, dass** das kopfseitige Stirnende in der Querebene zumindest einen Freiraum (5) aufweist, welcher optional grossflächig segmentartig ausgebildet ist.

13. Betonbohrer nach einem der vorherigen Ansprüche, **dadurch gekennzeichnet, dass** ein mit dem Schneidteil (1) drehfest verbundener Bohrerschaft (8) als Hohlzylinder ausgebildet ist.

## Claims

1. Concrete drill bit for a rotating and percussively driven power tool with a cutting section (1) and a percussive section (2) that can move axially, in relation to this, to a limited extent, the two said sections each having an end-face working area for machining a drill hole surface (7), whereby the given end-face working areas of the cutting section (1) and the percussive section (2) are superimposed radially over each other when the concrete drill bit is rotating and, at least at the head end face, the percussive section (2) and the cutting section (1) are, in the transverse plane, segmented, with at least two striking segments (2a, 2b) and at least two cutting segments (1a, 1b) inserted into each other, **characterized in that** peripherally adjacent percussive segments (2a, 2b) and cutting segments (1a, 1b) form axial, intermediate, segment faces (3).

2. Concrete drill bit in accordance with claim 1, **characterized in that** the working areas are radially superimposed one over the other by a small central area and by up to the whole drill bit radius.

3. Concrete drill bit in accordance with claims 1 or 2, **characterized in that**, in an axial intermediate position of the percussive section (2) the cutting section (1) and the percussive section (2) form, during rotation, a substantially common, shell head surface (6) on the head end face.

4. Concrete drill bit in accordance with one of the preceding claims, **characterized in that** at least two percussive segments (2a, 2b) are connected to each other on the head end face of the percussive section (2).

5. Concrete drill bit in accordance with claim 4, **characterized in that** precisely two diametrically opposite, percussive segments connected to each other (2a, 2b) are disposed such that they are inserted into two diametrically opposite cutting segments (1a, 1b) that are not connected at the head end.

6. Concrete drill bit in accordance with one of the above claims, **characterized in that** the cutting rims of the cutting section (1) and/or of the cutting segments (1a, 1b) have a cutting radius of less than 1/20 of the drill bit diameter and optionally have a rake angle in the range of -10° to +10°.

7. Concrete drill bit in accordance with claim 4, **characterized in that** the cutting rims are formed of hard material inserts (4) and **in that** the hard material inserts (4) have layers of polycrystalline diamonds.

8. Concrete drill bit in accordance with one of the preceding claims, **characterized in that** the percussive section (2) has associated with it a separate push rod (9) that is guided such that it can move, to a limited extent, axially in the drill shaft.

9. Concrete drill bit in accordance with one of the preceding claims, **characterized in that** the percussive section (2) is made of material that is very resistant to abrasion.

10. Concrete drill bit in accordance with one of the previous claims, **characterized in that** the cutting section (1) is supported such that it can move, to a limited extent, axially towards an insertion end (10), for uptake in a power tool.

11. Concrete drill bit in accordance with claim 10, **characterized in that** the cutting section (1) is tensioned with a spring (14) such that it is axially sprung against the insertion end (10).

12. Concrete drill bit in accordance with one of the preceding claims, **characterized in that** the head end face has at least one free space (5), in the transverse plane, that optionally has a large surface area by being segmented.

13. Concrete drill bit in accordance with one of the preceding claims, **characterized in that** a drill bit shaft (8) connected, rotationally fixed, to the cutting section (1), has a hollow, cylindrical form.

## Revendications

1. Foret à béton pour un appareil portatif à entraînement en rotation et en percussion, comprenant une partie de coupe (1) et une partie de percussion (2) à mobilité axiale limitée par rapport à celle-ci, lesquelles comportent chacune des zones de travail frontales pour travailler une surface de trou foré (7), la zone de travail frontale respective de la partie de coupe (1) et de la partie de percussion (2) se superposant radialement lors de la rotation du foret à béton et, au moins au niveau de l'extrémité frontale côté tête, la partie de percussion (2) et la partie de coupe (1) étant conformées de manière emboîtée l'une dans l'autre dans le plan transversal, sous forme segmentée, avec au moins deux segments de percussion (2a, 2b) et au moins deux segments de coupe (1a, 1b), **caractérisé en ce que** des segments de percussion (2a, 2b) et des segments de coupe (1a, 1b) circonférentiellement voisins forment des surfaces intersegments communes s'étendant axialement (3).

2. Foret à béton selon la revendication 1, **caractérisé en ce que**, lors de la rotation, les zones de travail se superposent radialement depuis une petite zone centrale jusqu'au rayon de forage total.

3. Foret à béton selon la revendication 1 ou 2, **caractérisé en ce que**, dans une position intermédiaire axiale de la partie de percussion (2), la partie de coupe (1) et la partie de percussion (2) forment, en rotation, une surface enveloppante de tête sensiblement commune (6) à l'extrémité frontale côté tête.

4. Foret à béton selon une des revendications précédentes, **caractérisé en ce qu'**au moins deux segments de percussion (2a, 2b) sont reliés entre eux à l'extrémité frontale côté tête de la partie de percussion (2).

5. Foret à béton selon la revendication 4, **caractérisé en ce qu'**exactement deux segments de percussion diamétralement opposés et reliés entre eux (2a, 2b) sont disposés de manière emboîtée dans exactement deux segments de coupe diamétralement opposés et non reliés à l'extrémité frontale côté tête (1a, 1b).

6. Foret à béton selon une des revendications précédentes, **caractérisé en ce que** les arêtes de coupe de la partie de coupe (1), respectivement du segment de coupe (1a, 1b) présentent un rayon de coupe inférieur à 1/20 du diamètre de forage et optionnellement un angle d'attaque compris entre - 10° et + 10°.

7. Foret à béton selon la revendication 4, **caractérisé en ce que** les arêtes de coupe sont formées par des inserts en substance dure (4), et **en ce que** les inserts en substance dure (4) comportent optionnellement des couches en diamants polycristallins (PKD).

8. Foret à béton selon une des revendications précédentes, **caractérisé en ce qu'**un poussoir (9) guidé séparément avec une mobilité axiale limitée dans la tige de foret (8) est associé à la partie de percussion (2).

9. Foret à béton selon une des revendications précédentes, **caractérisé en ce que** la partie de percussion (2) est constituée de matériau très résistant à l'usure.

10. Foret à béton selon une des revendications précédentes, **caractérisé en ce que** la partie de coupe (1) est montée avec une mobilité axiale limitée par rapport à une extrémité d'insertion (10) destinée à être logée dans un appareil portatif.

11. Foret à béton selon la revendication 10, **caractérisé en ce que** la partie de coupe (1) est précontrainte axialement de manière élastique contre l'extrémité d'insertion (10) par un moyen élastique (14).

12. Foret à béton selon une des revendications précédentes, **caractérisé en ce que** l'extrémité frontale côté tête comporte, dans le plan transversal, au moins un espace libre (5) qui est conçu de manière segmentée, optionnellement sur une grande surface.

13. Foret à béton selon une des revendications précédentes, **caractérisé en ce qu'**une tige de forage (8) solidaire en rotation de la partie de coupe (1) est conformée en cylindre creux.
